(19) Europäisches Patentamt / European Patent Office / Office européen des brevets

(11) **EP 4 327 154 B1**

(12) **EUROPÄISCHE PATENTSCHRIFT**

(45) Veröffentlichungstag und Bekanntmachung des Hinweises auf die Patenterteilung:
**05.08.2026 Patentblatt 2026/32**

(21) Anmeldenummer: **22724667.5**

(22) Anmeldetag: **21.04.2022**

(51) Internationale Patentklassifikation (IPC):
**G02B 21/00** (2006.01)   **G01N 21/64** (2006.01)
**G01N 21/47** (2006.01)

(52) Gemeinsame Patentklassifikation (CPC):
**G02B 21/0076; G01N 21/6458; G02B 21/0032; G02B 21/008;** G01N 21/4795

(86) Internationale Anmeldenummer:
**PCT/EP2022/060557**

(87) Internationale Veröffentlichungsnummer:
**WO 2022/223695 (27.10.2022 Gazette 2022/43)**

(54) **VERFAHREN UND BELEUCHTUNGSVORRICHTUNG DER ADAPTIVEN OPTIK IN DER REFLEXIONSMIKROSKOPIE**

METHOD AND ILLUMINATION APPARATUS OF ADAPTIVE OPTICS IN REFLECTION MICROSCOPY

PROCÉDÉ ET DISPOSITIF D'ÉCLAIRAGE D'OPTIQUE ADAPTATIVE EN MICROSCOPIE À RÉFLEXION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.04.2021 DE 102021110263**

(43) Veröffentlichungstag der Anmeldung:
**28.02.2024 Patentblatt 2024/09**

(73) Patentinhaber: **Max-Planck-Gesellschaft zur Förderung der Wissenschaften e.V. 80539 München (DE)**

(72) Erfinder:
- **SEELIG, Johannes Dominik 50677 Köln (DE)**
- **VISHNIAKOU, Ivan 53173 Bonn (DE)**

(74) Vertreter: **Kreuels, Justus Kreuels Henrichs Pannen Patent- und Rechtsanwaltspartnerschaft mbB Tersteegenstraße 28 40474 Düsseldorf (DE)**

(56) Entgegenhaltungen:
WO-A2-2014/152739

- **DELPHINE DÉBARRE ET AL: "Image-based adaptive optics for two-photon microscopy", OPTICS LETTERS, OPTICAL SOCIETY OF AMERICA, US, vol. 34, no. 16, 15 August 2009 (2009-08-15), pages 2495 - 2497, XP001547260, ISSN: 0146-9592, DOI: 10.1364/OL.34.002495**
- **IVAN VISHNIAKOU ET AL: "Differentiable model-based adaptive optics with transmitted and reflected light", ARXIV.ORG, CORNELL UNIVERSITY LIBRARY, 201 OLIN LIBRARY CORNELL UNIVERSITY ITHACA, NY 14853, 27 July 2020 (2020-07-27), XP081727596**
- **ALEX TURPIN ET AL: "Light scattering control in transmission and reflection with neural networks", ARXIV.ORG, CORNELL UNIVERSITY LIBRARY, 201 OLIN LIBRARY CORNELL UNIVERSITY ITHACA, NY 14853, 15 May 2018 (2018-05-15), XP081021381, DOI: 10.1364/ OE.26.030911**

- IVAN VISHNIAKOU ET AL: "Adaptive optics with reflected light and deep neural networks", ARXIV.ORG, CORNELL UNIVERSITY LIBRARY, 201 OLIN LIBRARY CORNELL UNIVERSITY ITHACA, NY 14853, 9 April 2020 (2020-04-09), XP081640534

**Beschreibung**

Die vorliegende Erfindung betrifft das technische Gebiet der adaptiven Mikroskopie und insbesondere die adaptive Reflexionsmikroskopie und deren technische Anwendungen.

In der optischen Mikroskopie, insbesondere in der optischen Mikroskopie von biologischen Proben, ist die Bildgebung durch Aberrationen und Streuung begrenzt. In diesem Zusammenhang hat sich gezeigt, dass die optische Auflösung verbessert werden kann, wenn beispielsweise die Methode der Laser-Scanning-Mikroskopie mit Methoden der adaptiven Optik kombiniert wird. Dies ermöglicht, dass Aberrationen mittels einer geeigneten Wellenfrontformung vermindert werden können.

Um eine solche beschränkt durchsichtige (d.h. mit Aberrationen und Lichtstreuung behaftete) Probe zu untersuchen kann Bestrahlungslicht analysiert werden, nachdem es die Probe durchlaufen hat oder wenn es von der Probe reflektiert wird. Bei einer beschränkt lichtdurchlässigen Probe, insbesondere wenn ein Bild innerhalb eines streuenden Materials aufgenommen werden soll, das von einer Seite optisch besser zugänglich ist als von der anderen, erscheint insbesondere die Bildgebung mit reflektiertem Licht geeigneter. Soll eine Probe lediglich, z.B. mittels Laserlicht, "bearbeitet" werden, ist vor allem wichtig, dass das Laserlicht nach seiner Transmission durch die Probe mit einer zuvor festgelegten räumlichen Intensität auf die Probe strahlt.

Die Bildgebung mit reflektiertem Licht ist jedoch mit der Schwierigkeit verbunden, dass Aberrationen, die in einem Anregungspfad entstehen (wenn das Bestrahlungslicht zu der Probe hingeführt wird) und Aberrationen, die in einem Detektionspfad entstehen (der Weg den das von der Probe reflektierte Licht läuft) im Allgemeinen verschieden und auch nicht leicht voneinander zu trennen sind.

Noch einmal in anderen Worten: In zahlreichen Anwendungen der (biologischen) Mikroskopie, wenn versucht wird mit einem Lichtmikroskop in Gewebe oder andere nur teilweise durchsichtige Materialien zu schauen, werden Bestrahlungslichtstrahlen abgelenkt und gestreut, was zu einem unscharfen Bild mit wenig Licht führt. Insbesondere kann das Bestrahlungslicht durch einen Laser bereitgestellt werden, der über die Probe rastert. Dieses Rastern keine mittels Ablenkspiegeln technisch umgesetzt werden. Das so erzeugte Bild wird allgemein dadurch gebildet, dass Anregungslicht, das aus einem Mikroskopobjektiv in die Probe eindringt, dort teilweise in das Objektiv zurückreflektiert wird und in ein "Probenbild" fokussiert wird, welches aufgrund der Steuerung verzerrt ist. Die Verzerrung eines Bildes innerhalb eines wenig durchsichtigen Materials entsteht dadurch, dass das Bestrahlungslicht, das auf dem Anregungspfad in die Probe eindringt von seinem Weg abgelenkt wird. Analog verhält sich das von der Probe reflektierte Licht: Dieses wird von einer Ebene, die im Fokus eines Mikroskops liegt, zurückgestreut. Diese Fokusebene (oder besser Fokusvolumen) kann zusammen mit den dort vorhandenen reflektierenden Strukturen (zum Beispiel Gewebe) als sekundäre Lichtquelle betrachtet werden. Das von der sekundären Lichtquelle ausgehende reflektierte Licht wird von einem Objektiv gesammelt und in ein Bild fokussiert. Das reflektierte Licht (oder in anderen Worten die sekundäre Lichtquelle) wird bei seinem Weg aus der Probe heraus, ähnlich wie das Bestrahlungslicht, von seinem ungestörten Weg abgelenkt. Die kombinierten Ablenkungen des Bestrahlungslichts und des Reflexionslichts tragen - zusammen mit den Eigenschaften des reflektierenden Materials - zu der gesamten Verzerrung des Bildes bei.

Neue Methoden des "Machine-Learning", insbesondere unter Zuhilfenahme von neuronalen Netzwerken, bieten neuartige Ansätze, um solche Verzerrungen bzw. Aberrationen sowohl bei der Transmission als auch bei der Reflexion, die beim Durchgang durch einen Streukörper auftreten, zu korrigieren. Um Korrekturen für diese Verzerrungen zu finden, werden die neuronalen Netzwerke typischerweise mittels großer synthetisch erzeugter Datensätze trainiert. Große Datensätze werden benötigt, um zum einen die zahlreichen Parameter eines neuronalen Netzwerks zu adjustieren und zum anderen, da die neuronalen Netzwerke typischerweise keine Kenntnis über einen zugrunde liegenden Bilderzeugungsprozess haben. D.h., selbst an sich bekannte physikalischen Vorgänge, werden den neuronalen Netzwerken implizit über die Datensätze zugänglich gemacht.

Häufig basieren in der Praxis die entsprechenden Trainingsdatensätze auf Überlagerungen von sogenannten "Zernike-Polynomen", die wahrscheinlich vorkommende Verzerrungen annäherungsweise simulieren. Diese sind allerdings nicht immer in der Lage tatsächlich vorhandene Verzerrungen akkurat wiederzugeben. Zum anderen, je stärker ein Streukörper "streut", desto höhere Ordnungen dieser "Zernike-Polynomen" wären notwendig, um potenziell alle möglichen "Streusituationen" für diese Fälle zu umfassen. Für diese Fälle werden sehr große Datensätze vonnöten, deren Erzeugung beträchtliche Material- als auch Zeitressourcen verbrauchen würde.

Die Veröffentlichungen von "Michael Kellman, Emrah Bostan, Michael Chen, and Laura Waller 'Data-driven design for fourier ptychographic microscopy' in 2019 IEEE International Conference on Computational Photography(ICCP), pages 1-8. IEEE, 2019" und von "Fei Wang, Yaoming Bian, Haichao Wang, Meng Lyu, Giancarlo Pedrini, Wolfgang Osten, George Barbastathis, and Guohai Situ. 'Phase imaging with an untrained neural network' in Light: Science & Applications, 9(1):1-7, 2020" behandeln ebenfalls Probelmstellungen auf diesem Gebiet.

VAN VISHNIAKOU ET AL.: "Differentiable model-based adaptive optics with transmitted and reflected light", ARXIV.ORG, CORNELL UNIVERSITY LIBRARY, 201 OLIN LIBRARY, CORNELL UNIVERSITY, ITHACA, NY 14853, 27. Juli 2020 (2020-07-27), zeigt ein Verfahren zum Optimieren von Parametern eines physikalischen Lichtausbreitungs-Modells, insbesondere eines Lichtausbreitungs-Modells bei der Laser-Mikroskopie im Rasterverfahren.

Es ist demnach die Aufgabe der Erfindung ein Verfahren sowie eine Bestrahlungsvorrichtung anzugeben mit denen Verzerrungen in einem optischen System effektiv reduziert werden können.

Die Aufgabe wird gelöst mit den Merkmalen der unabhängigen Ansprüche.

Gemäß einem ersten Aspekt der Erfindung ist ein Verfahren zum Optimieren von Parametern eines physikalischen Lichtausbreitungs-Modells, insbesondere eines Lichtausbreitungs-Modells bei der (konfokalen) Laser-Mikroskopie im Rasterverfahren angegeben, das die folgenden Schritte umfasst:

a) Vorhalten eines physikalischen Models $M_{Licht}$ der Lichtausbreitung in einem optischen System, insbesondere der Lichtausbreitung in einem Mikroskop. Prinzipiell können hierbei verschiedene physikalische Modelle verwendet werden, die in der Lage sind eine Lichtausbreitung in optischen Systemen zu beschreiben. Als Beispiele seien Modelle der Lichtausbreitung genannt, die mittels Matrizenoptik oder mittels Verfahren der Wellenoptik beschrieben werden. In beiden Fällen führt das Vorhalten des physikalischen Models zu einem "Informationsgewinn", da durch die Modele zumindest eine ungestörte Lichtausbreitung im Idealfall (zum Beispiel im Idealfall der geometrischen Optik) beschrieben wird;

b) Einstrahlen einer Eingangs-Lichtverteilung $I_0$ mittels einer Beleuchtungseinheit in einen Anregungspfad des optischen Systems. Typischerweise wird die Eingangs-Lichtverteilung $I_0$ mit einem Laserstrahl mit einem Gaußschen-Intensitätsprofil der besonders vorteilhaft in dem optischen System fokussiert werden kann, eingestrahlt. Mit dem optischen System kann beispielsweise eine Probe untersucht werden. Der Lichtweg, der zu einer Probe des optischen Systems führt, wird nachstehend als Anregungspfad bezeichnet, da die Probe, wenn sie mit der Lichtverteilung $I_0$ bestrahlt wird, quasi "angeregt" wird als "sekundäre Lichtquelle" zu leuchten. Der Begriff Anregungspfad ist also nicht dahingehend zu verstehen, dass der optische Lichtweg, der zu der Probe führt "angeregt" wird. Vorzugsweise ist die Eingangs-Lichtverteilung $I_0$ bekannt und definiert;

c) Durchqueren der Lichtverteilung $I_0$ durch einen Streukörper, wobei der Streukörper in dem Anregungspfad des optischen Systems platziert ist und die Eingangs-Lichtverteilung $I_0$ zu einer Transmissions-Lichtverteilung $I_{TR}$ oder $I_0$ zu einer Reflexions-Lichtverteilung $I_{RE}$ abändert, bei der Reflexions-Lichtverteilung $I_{RE}$ handelt es sich um von dem Streukörper zurückreflektierte Strahlung. Insofern umfasst die Reflexions-Lichtverteilung $I_{RE}$ auch Verzerrungen die der Transmissions-Lichtverteilung $I_{TR}$ bis zu dem Ort des Streukörpers an dem die Strahlung reflektiert wird. Der Steuerkörper führt zu einer Verzerrung der EingangsLichtverteilung $I_0$ und ändert diese zu der Reflexions-Lichtverteilung $I_{RE}$ ab. Gewissermaßen kann der Streukörper als das Element angesehen werden, welches die ideale Lichtausbreitung gemäß des physikalischen Models $M_{Licht}$ in eine reale Lichtausbreitung mit immer mit mehr oder weniger starken Verzerrungen überführt;

d) Aufzeichnen der Reflexions-Lichtverteilung $I_{RE}$ oder Transmissions-Lichtverteilung $I_{TR}$. Prinzipiell ist es möglich, dass die Aufzeichnungseinheit die Intensitätsverteilung und/oder die Phasenverteilung der Reflexions-Lichtverteilung $I_{RE}$ aufzeichnet. Die Reflexions-Lichtverteilung $I_{RE}$ kann durch das optische System geführt und prinzipiell in einer beliebigen Brennebene aufgezeichnet werden, vorzugsweise an der Brennebene in der die Probe in späteren Anwendungen tatsächlich betrachtet werden soll.

e) Übergabe der aufgezeichneten Reflexions-Lichtverteilung $I_{RE}$ an das Modell $M_{Licht}$. Zusätzlich kann auch noch die bekannte Eingangs-Lichtverteilung $I_0$ an das $M_{Licht}$ übergeben werden, wodurch weitere Informationen bereitgestellt werden;

f) Berechnung von Verzerrungsparametern V des Modells $M_{Licht}$ basierend auf der bekannten Eingangs-Lichtverteilung $I_0$ und der Reflexions-Lichtverteilung $I_{RE}$, wobei die Verzerrungsparameter V insbesondere den Streukörper charakterisieren. Prinzipiell gibt es bei der Transmission in den Körper eine Verzerrung, die als Transmissions-Verzerrungsparametern $V_{TR}$ bezeichnet werden kann und eine weitere Verzerrung nachdem das Licht innerhalb des Streukörpers reflektiert wird, die als Reflexions-Verzerrungsparametern $V_{RE}$ bezeichnet werden kann. Ja nach Setup des Messaufbaus, können beide Verzerrungsparametern $V_{RE}$ und $V_{TR}$ unabhängig voneinander bestimmt werden. Wird aber lediglich das das reflektierte Licht aufgezeichnet, so umfasst diese sowohl die Verzerrung der Transmission als auch der Reflexion. In diesem Fall ist es deshalb zweckmäßig beide Verzerrungswerte zu dem Verzerrungsparameter V "zusammenzufassen". Insbesondere kann der Transmissions-Verzerrungsparametern $V_{TR}$ gemessen werden, wenn das reflektierte Licht mit dem Anregungslicht wenig kohärent ist, wie z.B. bei der Fluoreszenzanregung und Emission, oder allgemein bei Verwendung eines Leitsterns. In diesem Fall spiegelt das reflektierte oder fluoreszierende Licht den Transmissions-Verzerrungsparametern $V_{TR}$ wider.

Es ist eine Kernidee der Erfindung, dass die Reflexions-Lichtverteilung $I_{RE}$ zumindest teilweise als Fluoreszenz-Strahlung von einem fluoreszenzfähigen Körper innerhalb des Streukörpers reflektiert wird, wobei die Form des fluoreszenzfähigen Körpers und/oder die Fluoreszenzanregungszustände des Körpers bekannt ist. Sind die Form des fluoreszenzfähigen Körpers und/oder die Fluoreszenzanregungszustände des Körpers bekannt, kann diese Information beispielsweise in das Modell $M_{Licht}$ integriert werden oder mittels des Modells $M_{Licht}$ vorhergesagt werden, wie die Reflexions-Lichtverteilung $I_{RE}$ des fluoreszenzfähigen Körpers ohne Verzerrungen "eigentlich" aussehen müsste wodurch sehr effizient und genau die Verzerrungsparameter V bestimmt werden können. Indem der fluoreszenzfähigen Körpers eine für ihn charakteristische Fluoreszenz-Wellenlänge abstrahlt, kann er zuverlässig von den abgestrahlten Wellenlängen des übrigen Streukörpers unterscheiden werden. Konkret kann es sich bei dem fluoreszenzfähigen Körper um eine Kugel mit bekannten Durchmesser handeln. Kugelförmige Körper haben in der Optik den Vorteil, dass diese zumeist analytisch besonders gut zu simulieren, respektive zu modellieren sind. Die aufgezeichnete Reflexions-Lichtverteilung $I_{RE}$ zeigt bedingt durch die Streuung eben in diesem Fall keinen kugelförmigen Körper sondern ein verzerrtes Bild, aber es ist möglich die Verzerrungsparameter V so zu bestimmen, dass sich die aufgezeichnete Reflexions-Lichtverteilung $I_{RE}$ ergibt. Dies ist eben dadurch möglich, dass die vorgenannten Eigenschaften des Körpers definiert und bekannt sind. Vorteilhaft wird durch diese Methode also eine Möglichkeit bereitgestellt, um die Verzerrungsparameter V sehr effizient und genau bestimmen zu können.

Zusätzlich wird hierdurch der Vorteil erreicht, dass durch das physikalische Models $M_{Licht}$ der Lichtausbreitung in dem optischen System zahlreiche Informationen über das optische System quasi "a priori" vorhanden sind und bei der Berechnung der Verzerrungsparameter V genutzt werden können, um diese Berechnung deutlich effizienter zu gestalten als mit herkömmlichen Ansätzen des "Maschine-Learnings" (maschinelles Lernen, insbesondere mittels neuronalen Netzwerke). Das herkömmliche "Maschine-Learning" braucht insbesondere bei großen Verzerrungen durch den Steuerkörper eine sehr große Menge an Trainingsdaten - auch deshalb, weil die verwendeten neuronalen Netzwerke keinerlei Informationen über das zugrundeliegende optisches System haben und dieses quasi zusätzlich modellieren müssen. Durch die erfindungsgemäße Kombination einer "Maschine-Learning" Umgebung mit den Informationen über das optische System, die von dem physikalischen Models $M_{Licht}$ bereitgestellt werden, ist es möglich, die Verzerrungsparameter V deutlich effizienter mit einem viel kleineren Satz an Messdaten, respektive Trainingsdaten, zu bestimmen. Zusätzlich bietet das Verfahren den Vorteil, dass keine künstlichen "Zernike-Moden" zum Auffinden der Verzerrungen verwendet werden, sondern ein reale Streukörper, der vorzugsweise auch in späteren Anwendungen verwendet wird. Sind die Verzerrungsparameter V bekannt, kann bestimmt werden wie sich ein Lichtstrahl in Transmissionsrichtung durch das optische System hindurch bewegt und welche Verzerrungen er bei diesem Durchgang erfährt.

Es werden also insbesondere Verzerrungen charakterisiert, die innerhalb einer Probe beim Durchgang des Lichts erzeugt werden. Dies wird unter anderem dadurch erreicht, dass zum einen das physikalische Modell $M_{Licht}$ des optischen Systems verwendet wird, sodass bekannt ist wie das Licht "eigentlich" durch das optische System verlaufen müsste und zum anderen wird die Reflexion-Lichtverteilung $I_{RE}$ zumindest teilweise als Fluoreszenz-Strahlung von einem in die Probe/Streukörper eingebrachten fluoreszenzfähigen "definierten" Körpers aufgezeichnet. Da es bevorzugt bekannt ist, wie der definierte Körper ohne Verzerrungen eigentlich in dem aufgezeichneten Bild "aussehen müsste", können die Verzerrungen berechnet werden, die zu seinem "tatsächlich" aufgezeichneten Bild passen. Deswegen ist es zweckmäßig, dass die Form des fluoreszenzfähigen Körpers und/oder die Fluoreszenzanregungszustände des Körpers bekannt sind. Das Vorhalten des physikalischen Modells $M_{Licht}$ des optischen Systems führt zu einem wichtigen Informationsgewinn gegenüber herkömmlichen Machine-Learning Verfahren.

Vorzugsweise werden die Anregungszustände des fluoreszierenden Körpers so ausgewählt, dass das zur Anregung benötigte Laserlicht möglichst verzerrungsarm den Streukörper durchqueren kann. In einer alternativen Ausgestaltung wird der fluoreszierende Körper entsprechend der Wellenlänge ausgewählt, die für spätere Mikroskopieuntersuchungen des Streukörpers verwendet werden soll. Soll also beispielsweise der Streukörpers in späteren Untersuchungen mit einer Wellenlänge von beispielsweise 400 nm untersucht werden, so ist es vorteilhaft einen fluoreszierenden Körper auszuwählen, dessen Anregungszustände kleiner gleich 400 nm sind. Dies ist deshalb vorteilhaft, da im allgemeinen Licht von verschiedener Wellenlänge auch verschiedene Verzerrungsparameter zur Folge haben kann.

Allgemein kann jeder fluoreszenzfähige, streufähige oder beliebig anders anregbare Körper, der insbesondere kleiner ist als der Anregungsfokus dazu verwendet werden, die Verzerrungsparameter zu bestimmen.

Zweckmäßigerweise ist ein Fokus der Eingangs-Lichtverteilung $I_0$ größer ist als eine räumliche Ausbreitung des fluoreszenzfähigen Körpers orthogonal zur Einstrahlrichtung.

Es hat sich als vorteilhaft erwiesen, wenn der Fokus des Laserlichts in seinen Abmessungen größer ist als die Abmessungen Streukörpers. Hierdurch wird es möglich, dass wenn der Laser über den Streukörper in einem Rasterverfahren hinweg fährt an einem einzigen Rasterpunkt - an dem sich eben auch das Flüsschen den Kügelchen befindet - das vollständige Verzerrungsbild des Körpers quasi in einer einzigen Aufnahme abbilden kann. Wäre der Fokus des Laserlichts kleiner als die Abmessungen des Streukörpers, müssen zwangsläufig mehrere Bilder zu einem einzigen Gesamtbild des Streukörpers zusammengesetzt werden. Potenziell für dies zu unerwünschten Ungenauigkeiten in der Bestimmung der Verzerrungsparameter V.

Vorzugsweise ist der fluoreszierende Körper kugelförmig ausgebildet. Dies bietet den Vorteil, dass kugelförmige Körper besonders gut simuliert und/oder mathematisch mittels physikalischer Modelle analysiert werden können.

Vorzugsweise wird zur Anregung des fluoreszenzfähigen Körpers 2-Photonen Fluoreszenz verwendet.

Prinzipiell gibt es verschiedene Möglichkeiten den fluoreszierenden Körper zur Fluoreszenz anzuregen. Der einfachste Fall ist mittels der 1-Photonen Anregung. Hierbei hebt jeweils ein einzelnes Foton die Elektronen des fluoreszierenden Körpers in einen höheren Fluoreszenzanregungzustand.

In diesem Zusammenhang erweist sich allerdings die Multi-Photonen Anregung, insbesondere die 2-Phonten Anregung, als technisch vorteilhaft. Erreicht das Laserlicht nämlich eine bestimmte Leistungsdichte, ist es möglich ein Elektron anstatt eines einzelnen Photons mit einer Wellenlänge von beispielsweise 480 nm mittels zweier Photonen von jeweils 480 nm in den Fluoreszenzanregungszustand zu heben. Mit Hilfe eines starken, fokussierten Laserstrahls werden dabei nichtlineare optische Effekte erzeugt, die auf dem Zusammenspiel mehrerer gleichzeitig in einem Molekül eintreffenden Photonen (Lichtteilchen) beruhen. Die Stärke des erzeugten Signals steigt daher nicht linear mit der Zahl der eingestrahlten Photonen, sondern mit dem Quadrat (bei Zwei-Photonen-Effekten) oder der dritten Potenz (bei Drei-Photonen-Effekten). Die Arbeitsweise eines Multiphotonenmikroskops ähnelt der eines konfokalen Laser-Scanning-Mikroskops. Während jedoch die konfokale Laser-Scanning-Mikroskopie eine Eindringtiefe je nach Präparat von 50-80 $\mu$m hat, können mit der Multi-Photonen-Mikroskopie tiefere Bereiche, z. B. von 200 $\mu$m, in sehr günstigen Fällen sogar bis zu 1000 $\mu$m (=1 mm) erreicht werden. Dadurch sind Aufnahmen von lebenden Geweben möglich, die anderweitig für die Bildgebung unerreichbar sind. Dieses Verfahren ist zwar technisch aufwendiger, die Mikroskope bzw. der Laser aus diesem Grund auch teurer, bietet allerdings unter anderem folgende technische Vorteile.

Wie vorstehend dargestellt, erfordert die Erzeugung des Zwei-Photonen-Effekts eine sehr hohe Photonendichte, die im Normalfall nur ein gepulster Laser erzielen kann. Aber auch in diesem Fall kommt es nur im Fokuspunkt zu einer genügend hohen Photonendichte, um eine Fluoreszenzanregung zu erzeugen. Außerhalb der Fokusebene verteilt sich die gleiche Menge Anregungsphotonen auf einen stark zunehmenden Durchmesser des Strahlkegels. Zwei-Photonen-Anregung hängt aber vom Quadrat der Lichtintensität ab, so dass die Lichtintensitäten außerhalb der Fokusebene, im Gegensatz zu anderen Fluoreszenzmikroskopen, für die Erzeugung von Fluoreszenz nicht mehr ausreicht. Daraus ergeben sich praktische Vorteile:

- Ein Ausbleichen von Fluoreszenzfarbstoffen und die Erzeugung von Phototoxizität ist auf eine extrem kleine Umgebung des Fokuspunktes beschränkt. Ebenen darüber und darunter sind nicht betroffen.

- Die gesamte vom Objektiv aufgefangene Fluoreszenz kann für das zu erstellende Bild verwendet werden. Im Gegensatz zum konfokalen Laser-Scanning-Mikroskop ist also keine Lochblende (pinhole) nötig, um Licht aus anderen Ebenen auszufiltern. Daher ist es, wiederum im Vergleich zum konfokalen Laser-Scanning-Mikroskop, auch nicht nötig, die Fluoreszenz über die Scanspiegel aufzufangen. Stattdessen kann eine "non-descanned detection" durchgeführt werden. Die Detektion kann dadurch räumlich dichter am Präparat erfolgen, was wiederum das Auffangen eines Teils der im Präparat gestreuten Fluoreszenz erlaubt.

- Ein davon unabhängiger Vorteil ist die höhere Eindringtiefe durch die geringere Streuung von längerwelligem Licht. Der Streuquerschnitt $\sigma$ hängt sehr stark von der Frequenz v ab und steigt proportional zu v4. Kurzwelliges violettes Licht (400 nm) hat eine doppelt so hohe Frequenz wie langwelliges rotes Licht (800 nm) und wird daher 16-mal stärker gestreut. Wellenlängenabhängige Streuung geschieht auch in biologischen Geweben: Wenn mit einer starken Taschenlampe durch eine Hand geleuchtet wird, dringt fast nur der rote Lichtanteil durch. Da bei der Zwei-Photonen-Mikroskopie infrarotes oder dunkelrotes Licht für die Fluoreszenzanregung eingesetzt wird, können entsprechend tiefere Regionen erreicht werden.

Gemäß einem Aspekt der Erfindung wird die Reflexions-Lichtverteilung $I_{RE}$ mit einer Kamera an einem möglichen Ort einer Probe aufgezeichnet. Hierzu kann eine CCD Kamera oder einer cmos Kamera verwendet werden. Hierzu müssen die Kameras allerdings besonders fotosensitiv sein, da die Reflexions-Lichtverteilung $I_{RE}$ durch die Fluoreszenz des fluoreszenzfähigen Körpers erzeugt wird und deswegen nur eine geringe Lichtintensität aufweist. Es könnten auch mehrere Kameras verwendet werden, die eine leicht unterschiedliche Brennebene haben, um zusätzliche Information zu gewinnen. Beide beispielhaft aufgeführten Kameratypen zeichnen sich durch eine hohe räumliche Auflösung aus. Ihr Höhe die räumliche Auflösung der verwendeten Kamera ist, desto mehr Informationen können über das optische System aufgezeichnet werden, und desto genauer können die Verzerrungsparameter V berechnet werden. Für Reflexionsexperimente wird eine Kamera nur im Reflexionspfad benötigt. Reflexionsexperimente sind für Anwendungen in der Mikroskopie eine wichtige Konfiguration, da in diesem Fall ein Fokus innerhalb eines Steuerkörpers als reflektiertes Licht betrachtet wird. Aufgrund der durch die fluoreszenzbedingte geringe Lichtintensität der Reflexions-Lichtverteilung $I_{RE}$ wird besonders bevorzugt zum Aufzeichnen der Reflexions-Lichtverteilung $I_{RE}$ ein Photomultiplier verwendet. Ein solcher Photomultiplier bietet den Vorteil auch geringste Lichtintensitäten aufzuzeichnen und auflösen zu können. Die von dem Photomultiplier aufgezeichnete Lichtmenge kann dadurch erhöht werden, in dem eingestellt wird, dass der Laser über einen längeren Zeitraum über vordefinierte Punkte des Streukörpers rastert.

Im fall eines beugungslimitierten Leitsterns widerspiegelt die aufgezeichnete Intensität die Transmissions-Lichtverteilung $I_{TR}$.

Bevorzugt wird durch eine n-fache Variierung der Eingangs-Lichtverteilung $I_0$ ein n-facher Reflexions-Lichtverteilungs-Datensatz; $n$-$I_{RE}$, erzeugt wird. Dies hat den Vorteil, dass die Verzerrungsparameter V hierdurch deutlich genauer berechnet werden können, da mögliche Variationen des optischen Systems beim einstrahlen lediglich einer einzigen konstanten Eingangs-Lichtverteilung $I_0$ nicht genügen, um den Streukörper ausreichend zu charakterisieren. Dies ist insbesondere dann der Fall, wenn für spätere Anwendungen auch andere Intensitäten als die Eingangs-Lichtverteilung $I_0$ verwendet werden soll. Insbesondere bei einer starken Variation der Amplitude der Intensität der Eingangs-Lichtverteilung $I_0$ kann es innerhalb des Steuerkörpers zu optischen Effekten höherer Ordnung kommen, die durch einen Datensatz $n$-$I_{RE}$ charakterisiert werden können. Festzuhalten bleibt, dass die Menge des Datensatzes $n$-$I_{TR}$ deutlich geringer ausfällt, als bei den vorstehend beschriebenen herkömmlichen "Machine-Learning" Verfahren.

Zweckmäßig wird die Lichtverteilung mittels eines räumlichen Lichtmodulator (Spatial Light Modulator "SLM") variiert, der das Profil des Lichtstrahls moduliert. Für viele Anwendungen ist die Kontrolle der Phase und Intensität des Lichtstrahls von hoher Bedeutung. Besonders bevorzugt ist der SLM basierend auf flüssigen Kristallen, der insbesondere zur Phasenmodulation verwendet wird. In diesem Fall ist es zweckmäßig Phasenmuster zum Training des neuronalen Netzwerks zu verwenden. Alternativ dazu kann der räumliche Lichtmodulator ein digitaler Spiegel zum Erzeugen eines binären Intensitätsmusters sein. Bekannte hochgeschwindigkeits digitale Spiegel ("high speed digital micromirror device", DMD) können binäre Muster hoher und niedrige Werte (1er und 0er) mit einer Bildfrequenz von 22,7 kHz erzeugen. Wird also beispielsweise ein Dauerstrichlaser eingesetzt, der beständig auf den digitalen Spiegel strahlt, kann ein n-Tupel ($I_{Ei}$, $I_{Ai}$) mit dieser Frequenz erzeugt werden. Dieser DMD kann auch zur Erzeugung von Phasenmustern verwendet werden. Es ist im Prinzip möglich mit einer Kombination von mehreren optischen Modulatoren oder mit einem Modulator, mehrere Lichtparameter (Intensität, Phase und Polarisation) gleichzeitig zu variieren, um die bestmöglich Kontrolle über die Lichtverteilung zu bekommen. Hierdurch wird das Verfahren noch flexibler und genauer.

Vorzugsweise wird das Modell $M_{Licht}$ auf einer Rechnereinheit vorgehalten und ein auf der Rechnereinheit implementierter Algorithmus berechnet die Transmissions-Verzerrungsparametern $V_{TR}$ automatisiert.

Dies bietet den Vorteil, dass das Verfahren zur Berechnung der Verzerrungsparametern V schnell, effizient und automatisiert durchgeführt werden kann, sodass ein Nutzer bei der Durchführung der notwendigen Experimente nicht zwingend anwesend sein muss.

In einer bevorzugten Ausführungsform wird als physikalischen Models $M_{Licht}$ der Lichtausbreitung ein differenzierbares Modell verwendet.

Ein differenzierbares, also insbesondere analytisch differenzierbares, Modell bietet den Vorteil kleinerer Fehler und weniger Rechenschritte als dies bei numerischen Methoden der Fall wäre. Um die Parameter des Modells, insbesondere die Verzerrungsparametern V aufzufinden, werden die Parameter des Modells so lange "verändert" bis das Modell möglichst gut den gemessenen Datensatz, also die aufgezeichnete Transmissions-Lichtverteilung $I_{TR}$ verschreibt. Dieses Optimierungsproblem kann durch das Auffinden eines Minimums der ersten Ableitung des differenzierbaren Modells gelöst werden. Das differenzierbare Modell bildet Input und Output des optischen Systems ab. Insbesondere kann eine automatisierte Differenzierung durchgeführt werden, die Bestandteil von Frameworks des "Machine-Learnings" wie etwa Tensorflow ist. Die automatische Differenzierung wird in diesen Frameworks zur Berechnung von Gradienten zur Optimierung einer Verlustfunktion in Bezug auf interessierende Parameter verwendet. Die Verlustfunktion vergleicht die Modellausgabe mit einer Zielausgabe, und die Diskrepanz wird durch Anpassung der Modellparameter minimiert.

Bevorzugt werden sowohl Transmission-Verteilungsparametern $V_{TR}$ als auch Reflexions-Verzerrungsparameter $V_{RE}$ des Modells $M_{Licht}$ basierend auf der aufgezeichneten Reflexions-Lichtverteilung $I_{RE}$ berechnet. Es genügt zur Bestimmung von $V_{TR}$ und $V_{RE}$ lediglich $I_{RE}$ aufzuzeichnen und in der Folge das Modell hinsichtlich beider Verzerrungsparameter zu optimieren.

Dies bietet den Vorteil, dass das die angepassten Parameter des optischen Modells $M_{Licht}$ sowohl den Transmission als auch die Reflexion des Lichtstrahls beschreiben, respektive modellieren können. Diese Information kann insbesondere für Anwendungen in der Reflexion-Mikroskopie verwendet werden.

Bevorzugt wird durch eine n-fache Variierung der Eingangs-Lichtverteilung $I_0$ ein n-facher Reflexions-Lichtverteilungs-Datensatz; $n$-$I_{RE}$, erzeugt. Dazu kann eine beliebige reflektierende oder rückstreuende Probe verwendet werden, es muss nur der Ursprung des gestreuten Lichts hinter oder innerhalb eines Streukörpers bestimmt werden können. Die ergibt einen analogen Vorteil wie vorstehend im Zusammenhang mit dem Datensatz $n$-$I_{RE}$ erläutert.

Vorzugsweise wird das Modell $M_{Licht}$ auf einer Rechnereinheit vorgehalten, wobei der auf der Rechnereinheit implementierter Algorithmus gleichzeitig den Transmissions-Verzerrungsparameter $V_{TR}$ und den Reflexionsparameter-Verzerrungsparameter $V_{RE}$ automatisiert mit Hilfe nur des Reflexions-Lichtverteilungs-Datensatzes berechnet.

Gemäß einem zweiten Aspekt der Erfindung ist eine Bestrahlungsvorrichtung angegeben, wobei die Bestrahlungsvorrichtung, insbesondere ein Laser-Reflexionsmikroskop, zur Durchführung eines der vorstehend beschriebenen Verfahren geeignet ist. Die Bestrahlungsvorrichtung weist auf:

ein Mikroskop umfassend

eine Beleuchtungseinheit, insbesondere einen Laser, ausgebildet zur Erzeugung einer Lichtverteilung $I_0$, besonders bevorzugt einen gepulsten Laser eingerichtet zur 2 Photonen Mikroskopie;

einen Anregungspfad mit einem in dem Anregungspfad vorgesehenen Streukörper "A", wobei der Anregungspfad die Lichtverteilung $I_0$ an den Ort einer Probe führt;

einen Photomultiplier, der von dem Streukörper reflektierte Licht $I_{RE}$, aufzeichnet;

eine Rechnereinheit, wobei auf der Rechnereinheit das vorstehend beschriebene physikalische Models $M_{Licht}$ der Lichtausbreitung in der Bestrahlungsvorrichtung vorgehalten wird und wobei ein auf der Rechnereinheit implementierter Algorithmus eingerichtet ist, basierend auf $M_{Licht}$ und $I_{RE}$, Transmissions-Verzerrungsparametern $V_{TR}$ und/oder Transmissions-Verzerrungsparametern $V_{RE}$ des Modells $M_{Licht}$ zu berechnen.

Es ist eine Kernidee der Erfindung einen ein fluoreszenzfähigen Körper innerhalb des Streukörpers A (140) vorzusehen, wobei die Reflexions-Lichtverteilung $I_{RE}$ zumindest teilweise als Fluoreszenz-Strahlung von dem fluoreszenzfähigen Körper innerhalb des Streukörpers reflektiert wird und wobei die Form des fluoreszenzfähigen Körpers und/oder die Fluoreszenzanregungszustände des Körpers bekannt ist.

Hierdurch wird der Vorteil erreicht, dass durch die Bestrahlungsvorrichtung eine Berechnung der Verzerrungsparameter V deutlich effizienter ausgeführt werden kann als mit herkömmlichen Techniken des "Maschine-Learnings" indem insbesondere die definierten und bekannten Eigenschaften des fluoreszenzfähigen Körpers zur Berechnung der Verzerrungsparameter Vals weitere Informationen hinzugezogen werden. Der "reale Streukörper" ermöglicht eine nicht nur hypothetische Generierung von Verzerrungsparametern.

Vorteilhafterweise wird das Verfahren zum Korrigieren von Verzerrungen einer Lichtverteilung $I_1$ bei Durchgang durch ein optisches System mit einem Streukörper, insbesondere bei der Laser-Mikroskopie im Rasterverfahren beim Bestrahlen einer Probe, eingesetzt. Das Verfahren weist die folgenden Schritte auf:

a) Extraktion eines Verzerrungsparametern V mit Merkmalen des zuvor beschrieben Verfahrens;

b) Einstellen eines komplementären Verzerrungsmusters $V^{\#}$ auf einem optischen Modulator, insbesondere einem SLM, des Anregungspfades (10), wobei der optischen Modulator in Strahlrichtung vor dem Streukörper angeordnet ist. Das komplementären Verzerrungsmusters $V^{\#}$ basiert auf dem komplex konjugierten Muster zu V.

Vorzugsweise wird das Verfahren abgeändert, wenn Verzerrungen korrigiert werden sollen bei denen die Lichtverteilung $I_1$ zusätzlich im Reflexionspfad verzerrt wird und die Lichtverteilung $I_1$ z.B. nach der Reflexion an der Probe mit möglichst guter Auflösung betrachtet werden soll. In diesem Fall erfolgt eine Extraktion des Transmissions-Verzerrungsparameters $V_{TR}$ und gleichzeitig eines Reflexions-Verzerrungsparameters $V_{RE}$, wobei bei den entsprechenden Messungen nur die Reflexions-Lichtverteilungen aufgezeichnet wird - vorzugsweise ohne Messung der Transmissions-Lichtverteilungen.

Insbesondere handelt es sich hierbei um denselben oder aber zumindest um einen Streukörper mit ähnlichen optischen Eigenschaften wie der Streukörper mit dem $V_{RE}$ und/oder $V_{TR}$ berechnet wurden.

Wird nun in einem nächsten Schritt die Lichtverteilung $I_1$ in das optische System eingestrahlt, wird die Lichtverteilung $I_1$ durch das auf dem optischen Modulator eingestellte Verzerrungsmusters $V_{TR}^{\#}$ im Vorfeld so verändert, dass die anschließende durch den Streukörper verursachte Verzerrung $V_{TR}$ in einer Art kompensiert wird, dass im Idealfall am Ort der Probe wird eine Lichtverteilung ankommt, die der eingestrahlten Lichtverteilung $I_1$ entspricht. Die optischen Verzerrungen des Streukörpers werden also effektiv korrigiert, was für viele Anwendungen besonders vorteilhaft ist. Anwendungen umfassen alle Situationen, die von der Kontrolle einer Lichtverteilung innerhalb oder durch einen Streukörper profitieren können, z.B. in der Mikroskopie mit reflektiertem Licht oder mit fluoreszierendem Licht oder anderen Kontrastmethoden. Des Weitern z.B. das Schneiden von Geweben oder Knochen mit Hilfe der Laser-Chirurgie. In diesem Fall, könnten z.B. Bildgebung oder Diagnostik mit dem Mikroskop mit dem Schneiden mit dem Laser im Gleichen Gerät kombiniert werden, wobei nur die Intensität oder Wellenlänge angepasst werden müssten. Auch makroskopische Anwendung sind denkbar, z.B. die optische Signalübertragung durch streuende Materialien wie z.B. Nebel.

Beim Austritt aus der Probe wird die Lichtverteilung $I_1$ wiederum durch Steuereffekte entsprechend dem Faktor

$V_{RE}$ verzerrt, was wiederum dadurch ausgeglichen werden, dass im Reflexionspfad ein weiterer optische Modulator in Strahlrichtung nach dem Austritt des Lichts aus der Probe angeordnet ist. Auf dem weiteren optischen Modulator wird entsprechend das komplementäre Verzerrungsmusters $V_{RE}^{\#}$ eingestellt, um die optischen Verzerrungen $V_{RE}$ zu kompensieren. Dieses Verfahren ermöglicht die durch die Probe induzierten Verzerrungen weitestgehend zu korrigieren und das Bild der Probe mit einer hohen Auflösung detektieren zu können, bzw. eine Probe mit einer definierten räumliche aufgelösten Intensität bestrahlen zu können.

Vorteilhafterweise wird die Bestrahlungsvorrichtung eingesetzt zum Korrigieren von Verzerrungen einer Lichtverteilung $I_1$ bei Durchgang durch ein optisches System mit einem Streukörper, gemäß eines der vorstehend beschriebenen Verfahren eingerichtet ist. Die Bestrahlungsvorrichtung, Laser-Reflexionsmikroskop, weist auf:

ein Mikroskop umfassend

eine Beleuchtungseinheit, insbesondere einen Laser, ausgebildet zur Erzeugung einer Lichtverteilung $I_0$,

einen Anregungspfad mit einem in dem Anregungspfad vorgesehenen Streukörper A, wobei der Anregungspfad die Lichtverteilung $I_0$ an den Ort einer Probe führt. Insbesondere handelt es sich hierbei um denselben oder aber zumindest um einen Streukörper mit ähnlichen optischen Eigenschaften wie der Streukörper mit dem die Werte für V, $V_{RE}$ und/oder $V_{TR}$ berechnet wurden.

einen optischen Modulator, der in dem Anregungspfad in Lichtausbreitungsrichtung vor dem Streukörper vorgesehen ist,

eine Rechnereinheit eingerichtet zur Steuerung des optischen Modulators, wobei die Rechnereinheit eingerichtet ist aus einem physikalischen Modells $M_{Licht}$ der Lichtausbreitung in der Bestrahlungsvorrichtung Verzerrungsparametern V zu extrahieren und den optischen Modulator mit einem die Verzerrungen des Streukörpers korrigierenden komplementären Verzerrungsmuster $V^{\#}$ einzustellen.

Vorzugsweise weist die Beleuchtungsvorrichtung zusätzlich einen weiteren optische Modulator im Reflexionspfad nach dem Austritt des Lichts aus der Probe auf, wobei auf dem weiteren optischen Modulator das komplementäre Verzerrungsmusters $V_{RE}^{\#}$ eingestellt ist. In diesem Fall wird auf dem ersten optischen Modulator im Anregungspfad $V_{TR}^{\#}$ eingestellt.

Mit dieser Beleuchtungsvorrichtung können Verzerrungen eines Lichtstrahls beim Durchgang durch das optische System bei der Transmission, insbesondre Verzerrungen verursacht durch den Streukörper, effektiv reduziert werden. Der weitere optische Modulator korrigiert effektiv ein verzerrtes Bild einer Probe in der Reflexionsmikroskopie, sodass ein Bild der Probe mit einer höheren Auflösung vom Mikroskop aufgenommen werden kann.

Im Folgenden werden bevorzugte Ausführungsbeispiele der vorliegenden Erfindung unter Bezugnahme auf die begleitende Figur erläutert:

Fig. 1:    zeigt einen schematischen Aufbau der adaptiven Bestrahlungsvorrichtung.

Fig. 2:    zeigt Messungen und eine Simulation des Einflusses eines fluoreszenzfähigen Körpers auf eine eingestrahlte Eingangslichtverteilung.

Fig. 3:    zeigt eine erfindungsgemäße Korrektur der Verzerrungen der eingestrahlte Eingangslichtverteilung beim Durchgang der Lichtverteilung durch einen Streukörper.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

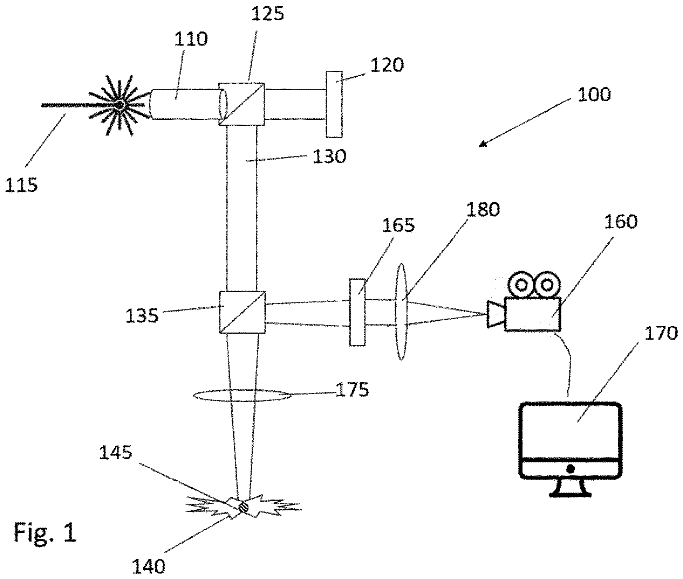

Fig. 1 illustriert den Aufbau zum Ermitteln der Verzerrungen durch einen Streukörper als auch eine entsprechende Korrektur dieser Verzerrungen in Transmissions- und/oder Reflexionsrichtung.

Im Rahmen dieser Erfindung wird eine Modelloptimierungsstrategie für die adaptive Optik angegeben: Die Lichtausbreitung durch ein optische System 100 - insbesondere ist das optische System ein 2-Photonen-Laser-Reflexionsmikroskop 100 - wird, einschließlich der als Parameter dargestellten unbekannten Aberrationen, mit einem differenzierbaren Modell $M_{Licht}$ beschrieben.

Zur Anpassung des Input-Output-Verhältnisses des Rechenmodells $M_{Licht}$ an den experimentellen Aufbau wird eine Vielzahl von Ausgangsbildern aufgezeichnet, die aus entsprechenden Eingangsphasenmodulationen resultieren.

Diese Eingangsphasenmodulationen werden erzeugt, indem zunächst eine EingangsLichtverteilung $I_0$ 110 von einem gepulsten Laser 115 erzeugt und dann zu einem räumlichen Lichtmodulator "SLM" 120 geleitet wird. Auf den SLM 120 werden für die jeweiligen Versuchsdurchläufe verschiedene Muster aufgespielt, die eine Eingangsphasenmodulation der Eingangs-Lichtverteilung $I_0$ 110 bewirken. Wie nachstehend noch im Detail gezeigt wird, können die Modellparameter mit dem Programm "Tensorflow" optimiert werden. Insbesondere werden Verzerrungsparameter des transmittierten Lichts $V_{TR}$ und des reflektierten Lichts $V_{RE}$ durch die Modellierung gefunden, die eine genaue Beschreibung des Streukörpers erlauben.

Der Versuchsaufbau ist in Fig. 1 schematisch dargestellt: Ein aufgeweiteter und kollimierter Laserstrahl wird von dem Laser 115 erzeugt und als EingangsLichtverteilung $I_0$ 110 von dem ersten räumlichen Lichtmodulator SLM 120 moduliert und auf ein Ablenkspiegelanordnung 125 geführt und von dieser und in einen Anregungspfad 130 geleitet. Mittels der verstellbaren Spiegel in der Ablenkspiegelanordnung 125 kann die Eingangs-Lichtverteilung $I_0$ 110 insbesondere mittels einer Verstellung der Spiegel über verschiedene Punkte einer Ebene "gerastert" werden.

Die modulierte Lichtverteilung $I_0$ durchläuft einen Strahlteiler 135 und strahlt dann in einen Streukörper A 140 in Transmissionsrichtung ein, wobei hierdurch eine Transmissions-Verzerrung $V_{TR}$ der Lichtverteilung $I_0$ hervorgerufen wird. Innerhalb des Streukörpers A 140 ist ein fluoreszenzfähiger Körper 145 vorgesehen, der durch eine entsprechend eingestellte Wellenlänge der Lichtverteilung $I_0$ angeregt wird Fluoreszenz-Strahlung zu emittieren, wobei die emittierte Fluoreszenz-Strahlung zumindest teilweise in den Anregungspfad abgestrahlt wird und somit als vom fluoreszenzfähigen Körper reflektierte Reflexions-Lichtverteilung $I_{RE}$ betrachtet werden kann. Beim erneuten Durchgang durch den Streukörper A 140 wird die Reflexions-Lichtverteilung $I_{RE}$ erneut verzerrt. Diese Verzerrung kann als Reflexions-Verzerrung $V_{RE}$ bezeichnet werden. Zweckmäßigerweise können die Reflexions-Verzerrung $V_{RE}$ und die Transmissions-Verzerrung $V_{TR}$ zu der Gesamtverzerrung V zusammengefasst werden.

Nach dem Verlassen des Streukörpers 140 trifft die Reflexions-Lichtverteilung $I_{RE}$ erneut auf den Strahlteiler 135, welcher die Reflexion-Lichtverteilung $I_{RE}$ mittels eines weiteren Linsensystems 180 in einen Photomultiplier 160 lenkt. Eine Korrektur der Reflexions-Verzerrung $V_{RE}$ kann durch einen zweiten räumlichen Lichtmodulator 165 ausgeführt werden, der im Strahlengang des reflektierten Lichts implementiert wird.

Zur Optimierung der Parameter des Modells $M_{Licht}$ kann der Photomultiplier direkt mit einer Rechnereinheit 170 verbunden sein und der Rechnereinheit 170 ihre jeweiligen Messungen übermitteln. Auf der Rechnereinheit 170 wird das Modell $M_{Licht}$ und ein entsprechender Algorithmus zur Berechnung der Parameter vorgehalten, sodass die Messung der Kameras direkt als Input an den Algorithmus übergeben werden können.

Die in den optischen System vorgesehenen Linsen 175,180 dienen der Strahlführung bzw. der Strahlfokussierung.

Nachfolgend wird das Modells $M_{Licht}$ im Detail in einer besonders bevorzugten Ausführungsform beschrieben: Licht, das das optische System 100 durchläuft wird durch eine komplexe Amplitude $U(x, y, z)$ beschrieben, die durch $U_0 = U(x, y, 0)$ initialisiert wird. Diese komplexe Amplitude durchläuft eine Sequenz von planaren Phasenobjekten und propagiert dazwischen in einem freien Raum entlang der optischen Achse (z-Achse; x, y, z sind räumliche Koordinaten). Eine Wellenfront $U(x, y, d)$ die mit einem Phasenobjekt $\phi(x, y, d)$ in der Ebene D in der agiert kann durch folgende Multiplikation beschrieben werden:

$$U(x, y, d) \exp\left[i\phi(x, y, d)\right] \tag{1}$$

Die Ausbreitung der Wellenfront im freien Raum über eine Entfernung d wird mit Hilfe des Winkelspektrums-Methode mit dem folgenden Operator berechnet:

$$U(x, y, z + d) = P_d(U(x, y, z)) = \iint A(f_x, f_y; z)\, \mathrm{circ}\left(\sqrt{(\lambda f_X)^2 + (\lambda f_Y)^2}\right)$$
$$\times H \exp\left[i2\pi(f_X x + f_Y y)\right]\, \mathrm{d}f_X\, \mathrm{d}f_Y. \tag{2}$$

mit $A(f_X, f_Y; z)$ als der Fourier-Transformierten von $U(x,y,z)$, $f_X$ und $f_Y$ sind räumliche Frequenzen und die circ-Funktion ist 1 innerhalb eines Radius in dem Argument und außerhalb 0; und $H(f_X, f_Y) = \exp\left[i\pi \frac{d}{\lambda}\sqrt{1 - (\lambda f_X)^2 - (\lambda f_Y)^2}\right]$ ist die optische Transfer-Funktion.

Die Intensitäten, die durch den Photomultiplier 160 aufgezeichnet werden, ergeben sich zu

$$I(x, y, z) = |U(x, y, z)|^2. \tag{3}$$

Bei der Zwei-Photonen-Bildgebung ist die induzierte fluoreszenz-Intensität proportional zum Quadrat der der Anregungsintensität:

$$I_f \propto I^2 = |U|^4 \qquad (4)$$

Mit diesen Gleichungen wird das Bild fluoreszenzfähiger Körpers 145 im Mikroskop (bzw. die PSF) mit der folgenden Funktion simuliert, wobei berücksichtigt wird, dass die propagierende Wellenfront durch das SLM und die Phasenaberration der Probe moduliert wird:

$$I_f = S(\phi_{SLM}, \phi_{aberration}) = \left| P_{f_{MO}}(U_0 \cdot \exp\left[i(\phi_{SLM} + \phi_{MO} + \phi_{aberration})\right])\right|^4 , \quad (5)$$

wobei $\phi_{SLM}$ die SLM-Phasenmodulation ist, $\phi_{aberration}$ die Phasenfläche der Aberration ist, $U_0$ die (komplexe) Amplitude des Strahlquerschnitts ist und $f_{MO}$ und $\phi_{MO}$ die Brennweite bzw. die entsprechende Phasenmodulation des Mikroskopobjektivs sind. Die SLM-Modulation wird direkt in der gleichen z-Ebene wie das Objektiv modelliert, wodurch unwesentliche Berechnungen entfallen, da sie sich in der zum Objektiv konjugierten Ebene befindet. Die Aberration wird ebenfalls in derselben Ebene modelliert, was Berechnungen erspart und die Korrektur vereinfacht: Da die Phasenfunktion der Aberration in der SLM-Ebene gefunden wird, kann ihre Inverse direkt auf das SLM angewendet werden, ohne dass zusätzliche Berechnungen der Ausbreitung zwischen verschiedenen Ebenen erforderlich sind.

Die Modellgleichung (5) enthält festlegbare Parameter $U_0$, $f_{MO}$ und $\phi_{MO}$, die an den an den experimentellen Aufbau angepasst sind, respektive diesem entsprechen, indem die entsprechenden tatsächlichen Größen des Versuchsaufbaus für die Parameter verwendet werden. Zusätzlich wurden geringfügige Rotationsabweichungen des SLM in der Bildebene beobachtet und durch entsprechende Gegenrotationen der aufgenommenen Fluoreszenz-Bilder ausgeglichen, da solche Rotationen nicht durch eine Anpassung der SLM-Phase korrigiert werden konnten. Eine feste Zoomstufe und ein festes Sichtfeld wurden für alle Experimente verwendet und das Modell wurde hinsichtlich dieser Bedingungen angepasst, wobei auch mehrere Modelle gleichzeitig, angepass für verschieden Zoomstufen verwendet werden könnten. Die Auflösung der Simulationen wurde durch die Diskretisierung des Strahlquerschnitts begrenzt, und die Brennweite $f_{MO}$ des simulierten Objektivs wurde daher erhöht, um proportional vergrößerte Bilder zu erhalten. Es wurde angenommen, dass $U_0$ ein Gauß'sches Strahlprofil mit einer "flat-Phase" aufweist. $U_0$ wurde in 512 x 512 Pixel diskretisiert.

Andere Parameter der Modellgleichung wurden manuell in folgendem Verfahren eingestellt: Zunächst wurde ein spärlicher aberrationsfreier fluoreszierender Leitstern (1 $\mu$m Durchmesser fluoreszierende Kügelchen eingebettet in 3 % Agarose) als fluoreszenzfähiger Körper 145 unter verschiedenen Modulationen beleuchtet (Zernike Modi Z1 bis Z10, die nacheinander mit wechselnden Werten dargestellt wurden). Die Parameter wurden dann manuell eingestellt, um eine gute Übereinstimmung zwischen den berechneten und den tatsächlichen Bildern zu erreichen. Dieses manuelle Abstimmungsverfahren wurde validiert, indem die Modelloptimierung für die Korrekturen in Abwesenheit von eingeführten Probenaberrationen durchgeführt wurde. Nach erfolgreicher Parameteroptimierung waren die Restaberrationen des Systems nahe Null, was darauf hindeutet, dass das Berechnungsmodell des experimentellen Mikroskopaufbaus gut dem tatsächlichen experimentellen Mikroskopaufbau entspricht.

Vorverarbeitung von Fluoreszenzbildern:

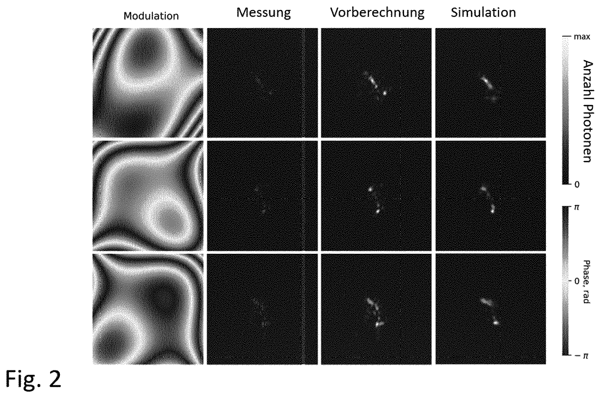

Die Fluoreszenzbilder wurden mittels Photonenzählung mit einer Auflösung von 512 x 512 Pixeln bei 30 Hz aufgenommen. Dies führte zu spärlich ausgeleuchteten Bildern mit geringer Anzahl von Photonen pro Pixel, mit vielen Diskontinuitäten (Lücken) in den Intensitäten, die eine korrekte Schätzung der Ähnlichkeit mit der Modellausgabe erschweren. Daher wurden alle Fluoreszenzbilder mit einem Tiefpassfilter vorverarbeitet: Die Bilder wurden einer diskreten Fourier-Transformation unterzogen und Frequenzen, die 0,15 der Musterauflösung überschreiten, wurden vor der inversen Transformation verworfen. Beispiele für Bilder vor und nach der Vorverarbeitung sind in Fig. 2 (Spalte zwei bzw. drei) gezeigt.

Modelloptimierung und Verlustfunktion:

Für die Korrekturen bei der Abbildung in einer verzerrten Probe wurde ein einzelner fluoreszierender Leitstern als fluoreszenzfähiger Körper 145 innerhalb des Streukörpers 140 im Sichtfeld zentriert und N zufällige Modulationen (typischerweise 20, jede generiert durch Summierung der Zernike-Modi Z1 bis Z10 mit Koeffizienten aus einer gleichmäßigen Zufallsverteilung im Bereich -1..1) durch Änderungen des SLM erzeugt, während die entsprechende fluoreszierende Bilder $I_f$ mit dem Photomultiplier 160 aufgenommen wurden. Die unbekannte Aberrationsphasenfunktion wurde dann in einem Optimierungsprozess gefunden mit dem Zielvorgabe einer Übereinstimmung von gemessenen und simulierten Bildern:

$$\arg\min_{\phi_{\text{aberration}}} \sum_{j=1}^{N} \text{loss}(S(\phi_{\text{SLM}_j}, \phi_{\text{aberration}}), I_{\text{f}_j}) \tag{6}$$

Hier sind $\text{SLM}_j$ und $\phi_{\text{aberration}j}$ Paare von SLM-Modulationen und entsprechenden fluoreszierenden Bildern, die im Zwei-Photonen-Mikroskop aufgenommen wurden. S ist das Mikroskopmodell wie in (5) angegeben. Die Verlustfunktion wird definiert, um die Ähnlichkeit zwischen simulierten und gemessenen Fluoreszenzbildern zu quantifizieren:

$$\text{loss}(\text{prediction}, \text{target}) = -r\,[\text{prediction}, \text{target}] \cdot \ln\left(\sum^{\text{pixels}} |\text{prediction}|\right), \tag{7}$$

wobei $r$ [prediction, target] der Pearson'sche Korrelationskoeffizient und $\ln(\Sigma^{\text{pixels}}|\text{prediction}|)$ ein zusätzlicher Kostenfaktor für die Intensitätserhaltung ist. Da der Pearson-Korrelationskoeffizient nicht von der Größe der Vorhersage abhängt, konvergiert der Optimierer wahrscheinlich zu einer Lösung, die eine hohe Korrelation liefert, aber einen Teil des Lichts verwirft, indem er dieses aus dem Sichtfeld umleitet, und daher in der Regel nicht zu guten Korrekturen führt. Die zusätzliche Einführung der Summe der Gesamtintensität fördert Lösungen, die die Anregungsintensität nicht verwerfen. Der Logarithmus sorgt dafür, dass die Steigung dieses regulierenden Faktors immer kleiner ist als die des Korrelationskoeffizienten, was ihn zu einem sekundären "Optimierungsziel" macht.

Das Modell (5) wurde mit "Tensorflow 2.4" unter Anpassung einer "angular spectrum method" und Verwendung des Optimierungsalgorithmus "Adam" mit einer Lernrate von 0,01 implementiert.

Gemäß Gleichung (5) wird die Phase $\phi_{\text{aberration}}$ als reellwertiger Tensor dargestellt, was eine Voraussetzung für Optimierungsvariablen in Tensorflow ist. Alle Modulationen und Musterantworten wurden in einen einzigen Stapel gepackt und in jeder Iteration des Optimierers auf einmal verwendet. 1000 Optimierungsschritte waren typischerweise ausreichend, um einen Korrelationskoeffizienten des Modells mit der Beobachtung von > 0,9 zu erreichen. Die Optimierung dauerte zwischen 1 und 2 Minuten auf einer Workstation mit vier Nvidia Titan RTX GPUs im datenparallelen Modus. Die resultierende Aberrationsphasenfunktion wurde negiert (mit 1 multipliziert) für die Darstellung auf dem SLM (mit 1 multipliziert) und führte hierdurch zur Korrektur der Aberration.

Das Verfahren funktioniert nun wie folgt:

Um eine differenzierbare modellbasierte adaptive Optik für die Zwei-Photonen-Mikroskopie zu implementieren, muss zunächst ein differenzierbares Modell des Aufbaus erstellt werden. Die Hauptelemente des Aufbaumodells sind in Fig. 1 dargestellt.

Wie schon vorstehend beschrieben: das Modell (5) besteht zumindest zum einen aus einer Phasenmodulation, die den räumlichen Lichtmodulator (SLM) 120 beschreibt, zweitens einer Phasenfunktion, die das fokussierende Objektiv beschreibt, und drittens einer (unbekannten) Phasenaberration der Probe.

Ein aufgeweiteter Laserstrahl wird durch den räumlichen Lichtmodulator 120 reflektiert, auf ein Paar (resonanter) Scannerspiegel 125 abgebildet, die ihrerseits in die hintere Brennebene des Mikroskopobjektivs abgebildet werden.

Das Fluoreszenzlicht wird in einer "Epidetektionskonfiguration" über einen dichroitischen Spiegel mit dem Photomultiplier 160 detektiert.

In einem ersten Schritt wird das Modell (5) an den Aufbau des Mikroskops 100 angepasst, indem die Modellparameter manuell in Abwesenheit des Streukörpers 140 angepasst werden. Hierfür wurde als fluoreszenzfähiger Körper 145 ein 1 $\mu$m großes fluoreszierendes Kügelchen, eingebettet in Agarose, verwendet. Durch die Darstellung beliebiger Phasen-Modulationen auf dem SLM 120 wird die Beobachtung der resultierenden Punktspreizungsfunktionen (PSFs) durch Abtasten der fluoreszierenden Kügelchen 145 ermöglicht.

Das Modell (5) erfasst die Transformation des SLM-Phasenmusters in die sich ergebende Fluoreszenz-PSF ("Point Spread Function"). Die Modellparameter wurden daher so eingestellt, dass die rechnerische Transformation der auf dem SLM 120 dargestellten Phasenmuster in die resultierenden PSFs die experimentell beobachteten Transformationen genau beschreibt. Wie in Abb. 2 zu sehen ist, wurde nach der Abstimmung der Modellparameter eine gute Übereinstimmung zwischen experimentell beobachteten und rechnerisch erzeugten Mustern erreicht.

Fig. 2 beschreibt eine Entsprechung zwischen rechnerisch erzeugten und experimentell gemessenen Bildern des fluoreszierenden Kügelchens 145. Drei repräsentative Beispiele (ein Beispiel pro Zeile), aufgenommen nach Korrektur verzerrenden Probe: Modulationen, dargestellt auf dem SLM 120 (erste Spalte), und entsprechende PSF-Bilder, wie sie mit Photomultiplier 160 gemessen wurden (zweite Spalte), vorverarbeitet für das Modell "Fitting" (dritte Spalte) und simuliert mit dem aus dem Fit extrahierten Werten, die in das Modell (5) eingesetzt wurden. Die Größe des Sichtfeldes beträgt 40μm x 40μm.

Wie in Fig. 2 gezeigt, wurde nach Berechnung der Modellparameter eine gute Übereinstimmung zwischen experimentell beobachteten und rechnerisch erzeugten Mustern erreicht.

Verzerrungen des Streukörpers 140 Probenaberrationen führen eine unbekannte Phasenfunktion in den optischen Aufbau des Mikroskops 100 ein. Um diese Situation rechnerisch abzubilden, wird dem Modell eine Phasenfläche als Satz freier Parameter hinzugefügt.

Diese unbekannte Phasenfläche muss durch die Optimierung so angepasst werden, dass diese die Verzerrungen beschreibt. Nach erfolgreicher Optimierung ist die Aberrationsphasenfläche bekannt, was dadurch verifiziert wird, dass das Modell (5) wieder mit dem optischen Aufbau des Mikroskops 100 übereinstimmt (Fig. 2). Mittels dieser gewonnen Erkenntnis können nun Korrekturen vorgenommen werden, indem der SLM 120 entsprechend voreingestellt wird, um die Verzerrungen zu korrigieren.

Der Optimierungsprozess, wie er vorliegend implementiert ist, nutzt die Vorteile von bekannten Frameworks für maschinelles Lernen. Die Optimierung in diesen Frameworks stützt sich auf ein differenzierbares Modell, das durch automatische Differenzierung in Kombination mit einer Gradientenabstiegsoptimierung optimiert wird. Ein Vorteil dieses Ansatzes ist die effiziente Implementierung der Optimierung auf einer GPU, zum Beispiel in Tensorflow, das hier verwendet wurde.

Um den Ansatz experimentell zu testen, wurde eine Probenabweichung eingeführt, indem die fluoreszierenden Kügelchen mit einer Schicht Vakuumfett auf einem Objektträger abgedeckt wurden. Zum Korrigieren der induzierten Abbildungsfehler wurde für das Modell ein fluoreszierendes Kügelchen oder ein Leitstern in der Mitte des Bildfeldes für die Modellierung ausgewählt. Die Bilder wurden mit einem einzelnen fluoreszierendes Kügelchen im Sichtfeld mit den Abmessungen von 60 μm x 40 μm aufgenommen.

Die Optimierung mit einem einzelnen Bild des fluoreszierenden Kügelchens und der entsprechenden einzelnen SLM-Phasenmodulation führt oft nicht zu zufriedenstellenden Ergebnissen, da mehrere mögliche Phasenmodulationen ähnliche planare PSF-Bilder erzeugen können.

Um den Optimierungsprozess einzuschränken, haben wurde das fluoreszierende Kügelchen mit einem Satz verschiedener Anregungsmodulationen bestrahlt durch zufällig mittels des SLM 120 erzeugter Phasenmuster und die daraus resultierenden Änderungen im verzerrten fluoreszierende Kügelchen abbildeten.

Insgesamt wurden 20 solcher Paare von SLM-Phasenaberrationen gemessen und entsprechende Zwei-Photonen-Bilder dienten als Eingabe für das Rechenmodell (aufgezeichnet mittels Photonenzählung bei einer Bildrate von 30 Hz, mit einer Regelschleife, die den SLM bei 2 Hz). Die Optimierung des Modells, um die unbekannte Aberrationsphasenfunktion mit diesen 20 Bildern zu finden, dauerte ca. 90 Sekunden. Die berechnete Verzerrung wurde dann durch Multiplikation mit -1 invertiert und diese Korrektur wurde auf dem SLM 120 dargestellt, um die Verzerrung zu korrigieren.

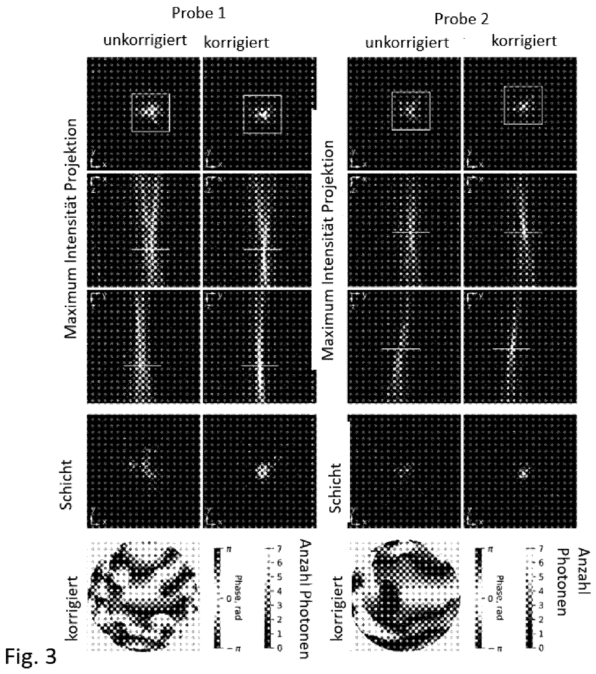

Zwei repräsentative Ergebnisse dieses Verfahrens sind in Fig. 3 dargestellt.

Fig. 3 zeigt Zwei-Photonen-Volumenbilder des fluoreszierenden Kügelchens vor und nach der Korrektur. Obere Reihe: Projektion des Volumenbildes eines fluoreszierenden Kügelchens in axialer (z) Richtung. Zweite und dritte Reihe: Projektionen entlang der x- und y-Achse. Vierte Reihe: Volumenausschnitt bei maximaler Fokusintensität für jedes der Volumina, Größe ist 13 x13 μm. Untere Reihe: Korrekturen, die auf dem SLM 120 angezeigt werden.

Die ersten drei Reihen in Fig. 3 zeigen drei orthogonale Projektionen des fluoreszierenden Kügelchens 145 vor und nach der Korrektur aufgenommen in einem Volumen mit einer axialen Schrittweite von 0,25 μm zwischen den Ebenen. Die vierte Zeile zeigt den Volumenausschnitt des Fokus bei maximaler Intensität (in axialer Richtung, angezeigt durch die weißen Rahmen und Linien in den oberen drei Zeilen). Die untere Reihe zeigt die Korrekturphasenfunktion, die sich aus der Optimierung Modell ergeben haben. Die Korrekturen führten also zu einem verbesserten Fokus, was bestätigt, dass die gefundenen Parameter die Verzerrungen durch den Streukörper wiedergeben und es erlauben, diese Verzerrungen zu korrigieren.

**Patentansprüche**

1. Verfahren zum Optimieren von Parametern eines physikalischen Lichtausbreitungs-Modells, insbesondere eines Lichtausbreitungs-Modells bei der Laser-Mikroskopie im Rasterverfahren, umfassend die folgenden Schritte:

   a) Vorhalten eines physikalischen Modells $M_{Licht}$ der Lichtausbreitung in einem optischen System (100), insbesondere der Lichtausbreitung in einem Mikroskop;
   b) Einstrahlen einer Eingangs-Lichtverteilung $I_0$ mit einer Beleuchtungseinheit (115) in einen Anregungspfad (130) des optischen Systems (100);

c) Durchqueren der Lichtverteilung $I_0$ durch einen Streukörper A (140), wobei der Streukörper A (140) in dem Anregungspfad (130) des optischen Systems (100) platziert ist und die Eingangs-Lichtverteilung $I_0$ zu einer Reflexions-Lichtverteilung $I_{RE}$ abändert;

d) Aufzeichnen der Reflexions-Lichtverteilung $I_{RE}$ oder Transmissions-Lichtverteilung ITR

e) Übergabe der aufgezeichneten Reflexions-Lichtverteilung $I_{RE}$ an das Modell $M_{Licht}$;

f) Berechnung von Verzerrungsparametern V des Modells $M_{Licht}$ basierend auf der Reflexions-Lichtverteilung $I_{RE}$, wobei die Verzerrungsparameter V insbesondere den Streukörper A (140) charakterisieren,

**dadurch gekennzeichnet,**

**dass** die Reflexions-Lichtverteilung $I_{RE}$ zumindest teilweise als Fluoreszenz-Strahlung von einem fluoreszenzfähigen Körper (145) innerhalb des Streukörpers reflektiert wird, wobei die Form des fluoreszenzfähigen Körpers und/oder die Fluoreszenzanregungszustände des Körpers bekannt ist.

2. Verfahren nach Anspruch 1, **dadurch gekennzeichnet, dass** ein Fokus der Eingangs-Lichtverteilung $I_0$ größer ist als eine räumliche Ausbreitung des fluoreszenzfähigen Körpers orthogonal zur Einstrahlrichtung.

3. Verfahren nach einem der vorhergehenden Ansprüche, **dadurch gekennzeichnet, dass** der fluoreszenzfähige Körper kugelförmig ausgebildet ist.

4. Verfahren nach einem der vorhergehenden Ansprüche, **dadurch gekennzeichnet, dass** zur Anregung des fluoreszenzfähigen Körpers 2-Photonen Fluoreszenz verwendet wird.

5. Verfahren nach einem der vorhergehenden Ansprüche, **dadurch gekennzeichnet, dass** die Reflexions-Lichtverteilung $I_{RE}$ mit einer Kamera (160), insbesondere am virtuellen Ort einer Probe, oder einem Photomultiplier (160) aufgezeichnet wird.

6. Verfahren nach einem der vorhergehenden Ansprüche, **dadurch gekennzeichnet**, durch eine n-fache Variierung der Eingangs-Lichtverteilung $I_0$ ein n-facher Reflexions-Lichtverteilungs-Datensatz; n-$I_{RE}$, erzeugt wird.

7. Verfahren nach einem der vorhergehenden Ansprüche, **dadurch gekennzeichnet, dass** das Modell $M_{Licht}$ auf einer Rechnereinheit (170) vorgehalten wird und dass ein auf der Rechnereinheit (170) implementierter Algorithmus die Verzerrungsparametern $V_{TR}$ automatisiert berechnet.

8. Verfahren nach einem der vorhergehenden Ansprüche, **dadurch gekennzeichnet, dass** als physikalischen Modells $M_{Licht}$ der Lichtausbreitung ein mathematisch differenzierbares Modell $M_{Licht}$ verwendet wird.

9. Verfahren nach einem der vorhergehenden Ansprüche, **dadurch gekennzeichnet, dass** Transmission-Verzerrungsparameter $V_{TR}$ und/oder Reflexions-Verzerrungsparameter $V_{RE}$ des Modells $M_{Licht}$ basierend auf der aufgezeichneten Reflexions-Lichtverteilung $I_{RE}$ berechnet werden, wobei die Reflexions-Lichtverteilung $I_{RE}$ die Lichtverteilung ist, die den Streukörper A (140) erneut durchquert.

10. Verfahren nach einem der vorhergehenden Ansprüche

wobei zum Korrigieren von Verzerrungen einer Lichtverteilung bei Durchgang durch ein optisches System (100) mit einem Streukörper (140Verzerrungsparameter V extrahiert werden und

wobei ein komplementäres Verzerrungsmuster $V^{\#}$ auf einem optischen Modulator (120) des Anregungspfades eingestellt wird, der in Strahlrichtung vor dem Streukörper angeordnet ist.

11. Verfahren nach Anspruch 10, **dadurch gekennzeichnet, dass** Transmissions-Verzerrungsparameter $V_{TR}$ und/oder Reflexions-Verzerrungsparameter $V_{RE}$ nach Anspruch 9 extrahiert werden und dass entsprechende komplementäres Verzerrungsmusters $V_{TR}^{\#}$ und/oder $V_{RE}^{\#}$ auf einem und/oder zwei optischen Modulatoren in einem Detektionspfad eingestellt werden.

12. Bestrahlungsvorrichtung geeignet zur Durchführung eines Verfahrens nach einem der Ansprüche 1 bis 11 aufweisend:

ein Mikroskop (100) umfassend

eine Beleuchtungseinheit (115), insbesondere einen Laser (115), ausgebildet zur Erzeugung einer Lichtver-

teilung $I_0$,

einen Anregungspfad (130) mit einem in dem Anregungspfad (130) vorhandenen Streukörper A (140), wobei der Anregungspfad (130) die Lichtverteilung $I_0$ an den Ort einer Probe führt;

einen Photomultiplier (160), der die von dem Streukörper reflektierte Reflexions-Lichtverteilung $I_{RE}$ aufzeichnet;

eine Rechnereinheit (170), wobei auf der Rechnereinheit (170) ein physikalisches Modells $M_{Licht}$ der Lichtausbreitung in der Bestrahlungsvorrichtung (100) vorgehalten wird und wobei ein auf der Rechnereinheit (170) implementierter Algorithmus eingerichtet ist, basierend auf $M_{Licht}$ und $I_{RE}$, Verzerrungsparametern V des Modells $M_{Licht}$ zu berechnen,

**dadurch gekennzeichnet,**

**dass** innerhalb des Streukörpers A (140) ein fluoreszenzfähigen Körper (145) vorhanden ist, wobei die Reflexions-Lichtverteilung $I_{RE}$ oder die Transmissions-Lichtverteilung $I_{TR}$ zumindest teilweise als Fluoreszenz-Strahlung von dem fluoreszenzfähigen Körper innerhalb des Streukörpers reflektiert wird, wobei die Form des fluoreszenzfähigen Körpers und/oder die Fluoreszenzanregungszustände des Körpers bekannt ist.

13. Bestrahlungsvorrichtung nach Anspruch 12 aufweisend:

einen optischen Modulator (120), der in dem Anregungspfad in Lichtausbreitungsrichtung vor dem Streukörper A (140) vorhanden ist,

wobei die Rechnereinheit (170) eingerichtet zur Steuerung des optischen Modulators (120), wobei die Rechnereinheit eingerichtet ist aus einem physikalischen Modells $M_{Licht}$ der Lichtausbreitung in der Bestrahlungsvorrichtung Verzerrungsparametern V zu extrahieren und den optischen Modulator (120) mit einem die Verzerrungen des Streukörpers korrigierenden komplementären Verzerrungsmuster $V^{\#}$ einzustellen.

## Claims

1. A method for optimising parameters of a physical light propagation model, in particular a light propagation model in laser microscopy using the scanning method, comprising the following steps:

a) Providing a physical model $M_{light}$ of light propagation in an optical system (100), in particular light propagation in a microscope;

b) Injecting an input light distribution $I_0$ into an excitation path (130) of the optical system (100) using an illumination unit (115);

c) Passing the light distribution $I_0$ through a diffuser A (140), wherein the diffuser A (140) is placed in the excitation path (130) of the optical system (100) and changes the input light distribution $I_0$ to a reflection light distribution $I_{RE}$;

d) Recording of reflection light distribution $I_{RE}$ or transmission light distribution $I_{TR}$;

e) Transfer of the recorded reflection light distribution $I_{RE}$ to the model $M_{light}$;

f) Calculation of distortion parameters V of the model $M_{Light}$ based on the reflection light distribution $I_{RE}$, wherein the distortion parameters V characterise in particular the diffuser A (140),

**characterised in that**

the reflection light distribution $I_{RE}$ is at least partially reflected as fluorescence radiation from a fluorescent body (145) inside the diffuser, wherein the shape of the fluorescent body and/or the fluorescence excitation states of the body are known.

2. The method according to claim 1, **characterised in that** a focus of the input light distribution $I_0$ is larger than a spatial extension of the fluorescent body orthogonal to the direction of incidence.

3. The method according to any one of the preceding claims, **characterised in that** the fluorescent body is spherical.

4. The method according to any one of the preceding claims, **characterised in that** two-photon fluorescence is used to excite the fluorescent body.

5. The method according to any one of the preceding claims, **characterised in that** the reflection light distribution $I_{RE}$ is recorded with a camera (160), in particular at the virtual location of a sample, or with a photomultiplier (160).

6. The method according to any one of the preceding claims, **characterised in that** an n-fold reflection light distribution data set, n-$I_{RE}$, is generated by an n-fold variation of the input light distribution $I_0$.

7. The method according to any one of the preceding claims, **characterised in that** the model $M_{Light}$ is provided on a computer unit (170) and that an algorithm implemented on the computer unit (170) automatically calculates the distortion parameters $V_{TR}$.

8. The method according to any one of the preceding claims, **characterised in that** a mathematically differentiable model $M_{Light}$ is used as a physical model $M_{Light}$ of the light propagation.

9. The method according to any one of the preceding claims, **characterised in that** transmission distortion parameters $V_{TR}$ and/or reflection distortion parameters $V_{RE}$ of the model $M_{Light}$ are calculated based on the recorded reflection light distribution $I_{RE}$, wherein the reflection light distribution $I_{RE}$ is the light distribution which again crosses through the diffuser A (140).

10. The method according to any one of the preceding claims,

   wherein distortion parameters V are extracted to correct distortions of a light distribution when passing through an optical system (100) with a diffuser (140) and
   wherein a complementary distortion pattern $V^{\#}$ is set on an optical modulator (120) of the excitation path which is arranged in the beam direction in front of the diffuser.

11. The method according to claim 10, **characterised in that** transmission distortion parameters $V_{TR}$ and/or reflection distortion parameters $V_{RE}$ according to claim 9 are extracted and that corresponding complementary distortion patterns $V_{TR}^{\#}$ and/or $V_{RE}^{\#}$ are set on one and/or two optical modulators in a detection path.

12. An irradiation device suitable for carrying out a method according to any one of claims 1 to 11, comprising:

   a microscope (100) comprising
   an illumination unit (115), in particular a laser (115), designed to produce a light distribution $I_0$,
   an excitation path (130) having a diffuser A (140) present in the excitation path (130), wherein the excitation path (130) leads the light distribution $I_0$ to a sample location;
   a photomultiplier (160), which records the reflection light distribution $I_{RE}$ reflected by the diffuser;
   a computer unit (170), wherein a physical model $M_{Light}$ of light propagation in the irradiation device (100) is provided on the computer unit (170) and wherein an algorithm implemented on the computer unit (170) is configured to calculate distortion parameters V of the model $M_{Light}$ based on $M_{light}$ and $I_{RE}$,
   **characterised in that**
   a fluorescent body (145) is present inside the diffuser A (140), wherein the reflection light distribution $I_{RE}$ or the transmission light distribution $I_{TR}$ is at least partially reflected as fluorescence radiation from the fluorescent body inside the diffuser, wherein the shape of the fluorescent body and/or the fluorescence excitation states of the body are known.

13. The irradiation device according to claim 12, comprising:

   an optical modulator (120), which is present in the excitation path in the light propagation direction in front of the diffuser A (140),
   wherein the computer unit (170) is configured to control the optical modulator (120), wherein the computer unit is configured to extract distortion parameters V from a physical model $M_{Light}$ of the light propagation in the irradiation device and to set the optical modulator (120) with a complementary distortion pattern $V^{\#}$ correcting the distortions of the diffuser.

**Revendications**

1. Procédé d'optimisation des paramètres d'un modèle physique de propagation de la lumière, notamment d'un modèle de propagation de la lumière pour la microscopie laser à balayage, comprenant les étapes suivantes :

   a) le stockage d'un modèle physique $M_{licht}$ de la propagation de lumière, en particulier de la propagation de lumière dans un microscope, dans un système optique (100) ;
   b) l'éclairage d'une distribution de lumière incidente $I_0$ à l'aide d'une unité d'éclairage (115) sur un trajet d'excitation (130) du système optique (100) ;

c) le passage de la distribution de lumière $I_0$ à travers un corps diffusant A (140), dans lequel le corps diffusant A (140) est placé sur le trajet d'excitation (130) du système optique (100) et transforme la distribution de lumière incidente $I_0$ en une distribution de lumière réfléchie $I_{RE}$ ;

d) l'enregistrement de la distribution de lumière réfléchie $I_{RE}$ ou de la distribution de lumière transmise $I_{TR}$ ;

e) le transfert de la distribution de lumière réfléchie $I_{RE}$ enregistrée vers le modèle de $M_{Licht}$ ;

f) le calcul des paramètres de distorsion V du modèle de $M_{Licht}$ sur la base de la distribution de lumière réfléchie $I_{RE}$, dans lequel les paramètres de distorsion V caractérisent notamment le corps diffusant A (140),

**caractérisé en ce que**

la distribution de lumière réfléchie $I_{RE}$ est au moins partiellement réfléchie sous forme de rayonnement de fluorescence par un corps fluorescent (145) situé à l'intérieur du corps diffusant, dans lequel la forme du corps fluorescent et/ou les états d'excitation de fluorescence du corps sont connus.

2. Procédé selon la revendication 1, **caractérisé en ce qu'**un foyer de la distribution de lumière incidente $I_0$ est supérieur à une propagation spatiale du corps fluorescent orthogonale à la direction d'incidence.

3. Procédé selon une des revendications précédentes, **caractérisé en ce que** le corps fluorescent a une configuration sphérique.

4. Procédé selon une des revendications précédentes, **caractérisé en ce que** la fluorescence à deux photons est utilisée pour exciter le corps fluorescent.

5. Procédé selon une des revendications précédentes, **caractérisé en ce que** la distribution de la lumière réfléchie $I_{RE}$ est enregistrée à l'aide d'une caméra (160), notamment à l'emplacement virtuel d'un échantillon ou d'un photomultiplicateur (160).

6. Procédé selon une des revendications précédentes, **caractérisé en ce qu'**une variation d'un facteur n de la distribution de la lumière incidente $I_0$ génère un ensemble de données de distribution de la lumière réfléchie d'un facteur n, $n$-$I_{RE}$.

7. Procédé selon une des revendications précédentes, **caractérisé en ce que** le modèle $M_{Licht}$ est stocké sur une unité de calcul (170) et qu'un algorithme implémenté sur l'unité de calcul (170) calcule automatiquement les paramètres de distorsion $V_{TR}$.

8. Procédé selon une des revendications précédentes, **caractérisé en ce qu'**un modèle mathématiquement différentiable $M_{Licht}$ est utilisé comme modèle physique de la propagation de lumière $M_{Licht}$.

9. Procédé selon une des revendications précédentes, **caractérisé en ce que** les paramètres de distorsion de transmission $V_{TR}$ et/ou les paramètres de distorsion de réflexion $V_{RE}$ du modèle $M_{Licht}$ sont calculés sur la base de la distribution de lumière réfléchie enregistrée $I_{RE}$, dans lequel la distribution de lumière réfléchie $I_{RE}$ est la distribution de lumière, qui traverse à nouveau le corps diffusant A (140).

10. Procédé selon une des revendications précédentes,

dans lequel des paramètres de distorsion V sont extraits afin de corriger les distorsions d'une distribution de lumière lors de sa traversée d'un système optique (100) comportant un corps diffusant (140) et

dans lequel un motif de distorsion complémentaire $V^{\#}$ est appliqué à un modulateur optique (120) du trajet d'excitation, qui est disposé avant le corps diffusant dans la direction de rayonnement.

11. Procédé selon la revendication 10, **caractérisé en ce que** les paramètres de distorsion de transmission $V_{TR}$ et/ou les paramètres de distorsion de réflexion $V_{RE}$ sont extraits conformément à la revendication 9 et que les modèles de distorsion complémentaires correspondants $V_{TR}^{\#}$ et/ou $V_{RE}^{\#}$ sont définis sur un et/ou deux modulateurs optiques dans un trajet de détection.

12. Dispositif d'irradiation convenant pour la mise en œuvre d'un procédé selon une des revendications 1 à 11, présentant :

un microscope (100) comprenant :

une unité d'éclairage (115), notamment un laser (115), configurée pour générer une distribution lumineuse $I_0$ ;

un trajet d'excitation (130) comportant un corps diffusant A (140) présent dans le trajet d'excitation (130), dans lequel le trajet d'excitation (130) dirige la distribution lumineuse $I_0$ vers l'emplacement d'un échantillon ;

un photomultiplicateur (160), qui enregistre la distribution lumineuse réfléchie $I_{RE}$ par le corps diffusant ;

une unité de calcul (170), dans lequel un modèle physique $M_{Licht}$ de la propagation de la lumière est stocké dans le dispositif d'irradiation (100) et dans lequel un algorithme implémenté sur l'unité de calcul (170) est configuré pour calculer les paramètres de distorsion V du modèle $M_{Licht}$ sur la base de $M_{Licht}$ et IRE,

**caractérisé en ce que**

un corps fluorescent (145) est présent à l'intérieur du corps diffusant A (140), dans lequel la distribution de lumière réfléchie $I_{RE}$ ou la distribution de lumière transmise $I_{TR}$ est au moins partiellement réfléchie sous forme de rayonnement de fluorescence par le corps fluorescent situé à l'intérieur du corps diffusant, dans lequel la forme du corps fluorescent et/ou les états d'excitation de fluorescence du corps sont connus.

**13.** Dispositif d'irradiation selon la revendication 12 présentant :

un modulateur optique (120), qui est situé sur le trajet d'excitation, avant le corps diffusant A (140) dans la direction de propagation de la lumière ;

une unité de calcul (170) configurée pour commander le modulateur optique (120), dans lequel l'unité de calcul est configurée pour extraire des paramètres de distorsion V d'un modèle physique $M_{Licht}$ de la propagation de lumière dans le dispositif d'irradiation et pour ajuster le modulateur optique (120) avec un motif de distorsion complémentaire $V^{\#}$, corrigeant les distorsions du corps diffusant.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Data-driven design for fourier ptychographic microscopy. **MICHAEL KELLMAN** ; **EMRAH BOSTAN** ; **MICHAEL CHEN** ; **LAURA WALLER**. 2019 IEEE International Conference on Computational Photography(ICCP). IEEE, 2019, 1-8

- **FEI WANG** ; **YAOMING BIAN** ; **HAICHAO WANG** ; **MENG LYU** ; **GIANCARLO PEDRINI** ; **WOLFGANG OSTEN** ; **GEORGE BARBASTATHIS** ; **GUOHAI SITU**. Phase imaging with an untrained neural network. *Light: Science & Applications*, 2020, vol. 9 (1), 1-7
- Differentiable model-based adaptive optics with transmitted and reflected light. **VAN VISHNIAKOU et al.** ARXIV.ORG. CORNELL UNIVERSITY, 27 July 2020